# EUROPÄISCHE PATENTSCHRIFT

(11) **EP 1 097 310 B1**
(45) Veröffentlichungstag und Bekanntmachung des Hinweises auf die Patenterteilung: **24.03.2004**
(21) Anmeldenummer: 99934625.7
(22) Anmeldetag: 08.07.1999
(51) Int. Cl.: F16D 23/06, F16D 13/68

(54) **SYNCHRONISIEREINRICHTUNG**
SYNCHRONIZATION DEVICE
DISPOSITIF DE SYNCHRONISATION

(30) Priorität: 14.07.1998 DE 19831503
(43) Veröffentlichungstag der Anmeldung: 09.05.2001
(73) Patentinhaber: ZF FRIEDRICHSHAFEN Aktiengesellschaft, 88038 Friedrichshafen (DE)
(72) Erfinder: FÜHRER, Gerhard, D-88048 Friedrichshafen (DE)
(86) Internationale Anmeldenummer: PCT/EP1999/004791
(87) Internationale Veröffentlichungsnummer: WO 2000/004299

(56) Entgegenhaltungen:
- DE-A- 19 506 987
- DE-B- 2 638 902
- DE-U- 1 871 879
- US-A- 2 627 955
- US-A- 4 356 901

## Beschreibung

Die Erfindung betrifft eine Synchronisierung nach dem Oberbegriff des Anspruchs 1.

Für die Übertragung der Antriebsleistung und die Anpassung des Motordrehmomentes an den Zugkraftbedarf eines Fahrzeugs werden heute praktisch ausschließlich mehrstufige Zahnradgetriebe eingesetzt.

Die Getriebeschaltung kann mit Hilfe einer Synchronisiereinrichtung erheblich vereinfacht werden. Beim Synchronisieren wird die Drehzahlanpassung der miteinander zu verbindenden Getriebeelemente selbsttätig oder gesteuert durchgeführt, um so das Doppelkuppeln beim Hochschalten bzw. das Doppelkuppeln mit Zwischengasgeben beim Rückschalten zu vermeiden. Die Fahrsicherheit wird deutlich erhöht, da der Gangwechsel auch in kritischen Fahrsituationen schnell, sicher und auch geräuschlos möglich ist, beispielsweise kann der rechte Fuß des Fahrers beim Bergabfahren während einer Rückschaltung auf der Bremse bleiben.

Eine Synchronisierung hat folgende Aufgaben zu erfüllen:
- Drehzahlanpassung von zwei unterschiedlich schnell rotierenden Getriebeelementen und der damit verbundenen Teile so, daß sie ohne Ratschgeräusch formschlüssig miteinander verbunden werden können;
- Sperren der formschlüssigen Verbindung bis zum Gleichlauf der zu verbindenden Getriebeelemente, um Ratschen und Beschädigungen der formschlüssigen Schaltelemente zu verhindern;
- Lösen der Sperre im Augenblick des Gleichlaufs;
- Drehzahlanpassung innerhalb kürzester Zeit und mit möglichst geringen Schaltkräften;
- Betriebssicherheit auch unter ungünstigen Umständen, wie beispielsweise bei kaltem, zähem Getriebeöl oder bei extrem schnellem Durchreißen der Gänge.

In den heutigen synchronisierten Fahrzeuggetrieben werden überwiegend Synchronisiereinrichtungen für jeden einzelnen Gang eingesetzt.

Weite Verbreitung hat dabei die Sperrsynchronisierung mit Konus gefunden. Bei diesem System werden konische Reibkegel für die kraftschlüssige Drehzahlanpassung der zu verbindenden Getriebeelemente eingesetzt. Diese Art der Synchronisierung findet sowohl in Personenwagen- als auch in Nutzfahrzeuggetrieben Verwendung.
Die gebräuchlichen Synchronisiereinrichtungen stellen die drei Grundfunktionen der Synchronisierung
- beliebig oft schließbares und lösbares Verbinden zweier um eine gemeinsame Achse rotierender Bauteile,
- Energieübertragung auf bzw. Energieabführung von einem rotierenden Bauteil (Beschleunigen, Abbremsen),
- Drehzahldifferenz zwischen zwei um eine gemeinsame Achse drehenden Bauteile auf einen Wert gleich oder nahe Null einregeln
zur Verfügung.

Bei Synchronisierungen mit Reiblamellen sind die kegelförmigen Reibglieder durch eine Anzahl von Lamellenscheiben ersetzt, die während der Drehzahlangleichung aneinander reiben. Dabei sind jeweils in einer Reihenfolge axial aneinander anliegende Scheiben entweder einerseits mit dem Synchronring oder der Getriebewelle verbunden oder andererseits mit dem Kupplungskörper am Zahnrad oder dem Zahnrad selbst. Eine solche Synchronisierung, die beispielsweise auch mit einer Verstärkungseinrichtung der Synchronkraft ausgestattet sein kann, ist aus der DE 32 08 945 A1 bekannt.

Aus der DE 195 06 987 A1 ist eine gattungsmäßige, formschschlüssige Schaltkupplung bekannt, deren Schiebemuffe aus einem äußeren Mitnehmerring, an dem eine Schaltgabel angreift, und aus einer Schaltnabe aufgebaut ist, die auf einem Synchronkörper drehfest, aber axial verschiebbar angeordnet ist. Die Schaltnabe trägt eine Schaltverzahnung, die mit einer Kuppelverzahnung an einem Kupplungskörper zusammenarbeitet. Die Stirnflächen der Schaltverzahnung und der Kuppelverzahnung liegen in entsprechenden Rotationsflächen, so daß sie bei der axialen Schaltbewegung stumpf aufeinander treffen. Der Kupplungskörper ist drehfest, aber axial elastisch nachgiebig mit einem Zahnrad verbunden, das drehbar auf einer Getriebewelle gelagert ist.

Zwischen dem Synchronkörper, der drehfest mit der Getriebewelle verbunden ist und dem Mitnehmerring, ist eine Rutschkupplung in Form einer federbelasteten Belaglamellenkupplung angeordnet, wobei der Mitnehmerring als äußerer Lamellenträger und die Schaltnabe als innerer Lamellenträger ausgebildet ist. An der Schaltnabe sind stirnseitig Deckel angebracht, die mit radialem Spiel zum Mitnehmerring laufen, und zwischen denen sich die Belaglamellen unter dem Druck einer Wellfeder abstützen.

Der Mitnehmerring trägt an seinem äußeren Umfang eine Einspurverzahnung, die mit einer Mitnehmerverzahnung eines Mitnehmers zusammenarbeitet, der drehfest, aber axial elastisch nachgiebig, mit dem Zahnrad verbunden ist. Die Zähne der Mitnehmerverzahnung sind schmaler als die Zahnlücken, so daß in Umfangsrichtung ein reichliches Spiel gebildet wird, das das Einspuren der Einspurverzahnung während des Schaltens erleichtert. Die Stirnflächen der Mitnehmerverzahnung und der Einspurverzahnung liegen in einer konischen Rotationsfläche, so daß sie in axialer Richtung zur Umfangsfläche und zur Stirnfläche des Mitnehmers einen Winkel bilden.

Wird die Schiebemuffe aus ihrer Neutralposition in Richtung Schaltposition verschoben, gelangt zunächst die Einspurverzahnung des Mitnehmerrings mit der Mitnehmerverzahnung des Mitnehmers in Berührung und in Eingriff, so daß über die Belaglamellen ein Rutschmoment vom Zahnrad auf die Getriebewelle übertragen wird. Dieses Drehmoment ist abhängig von der Anzahl der Lamellen, dem Radius der Lamellen und der Kraft der Wellfeder. Es ist maßgebend für die Zeit, die benötigt wird, um Gleichlauf zwischen dem Zahnrad und der Getriebewelle herzustellen. Sperrflächen an der Mitnehmerverzahnung verhindern, daß die Schaltverzahnung des Nabenteils mit der Kuppelverzahnung in Kontakt kommt, bevor annähernd ein Gleichlauf zwischen dem Zahnrad und der Getriebewelle erreicht ist.

Durch die in Rotationsflächen verlaufenden Stirnflächen der Mitnehmerverzahnung, der Einspurverzahnung, der Kuppelverzahnung und der Schaltverzahnung wird erreicht, daß die von den zu kuppelnden Getriebeelementen erzeugten Drehmomente keine Reaktionskräfte auf die Schaltkraft ausüben. Ferner werden durch die axiale Nachgiebigkeit des Mitnehmers und des Kupplungskörpers Kontaktstöße an der Mitnehmerverzahnung und Kuppelverzahnung weich aufgefangen, und es ergibt sich somit über den gesamten Schaltweg eine relativ gleichmäßige Schaltkraft, was den Schaltkomfort verbessert.

Üblicherweise werden als innere Lamellen beidseitig beschichtete Lamellen verwendet, während die Außenlamellen unbeschichtete Stahllamellen sind. Es sind aber auch einseitig beschichtete Lamellen anwendbar.

Die Lamellensynchronisierung nach dem Stand der Technik weist den Nachteil auf, daß im Bereich der Einspurverzahnung Verschleiß feststellbar ist, der durch das Auftreffen der Zahnstirnkanten und Zahnstirnflächen bei voller Differenzdrehzahl entstehen.

Der Erfindung liegt die Aufgabe zugrunde, den Verschleiß im Bereich der Einspurverzahnung zu verringern.

Die Aufgabe wird durch die vorliegende Erfindung gelöst mit den Merkmalen des Anspruchs 1. Ausgestaltungen sind Gegenstand von Unteransprüchen.

Die Höhe des Einspurimpulses ist direkt abhängig von dem Reibmoment der Lamellen. Je geringer das Reibmoment der Lamellen ist, desto kleiner ist der Impuls und der Verschleiß.
Erfindungsgemäß wird vorgeschlagen, an der Synchronisierung Mittel vorzusehen, die das beim Einschalten übertragene Moment zwischen der Verzahnung der Schiebemuffe und der Verzahnung am Kupplungskörper auf ein anfängliches kleineres Einspurmoment und ein anschließendes größeres Synchronmoment aufteilen.

In einer vorteilhaften Ausführung sind die Mittel durch eine Stufung der Lamellen gebildet, die ein zeitlich nacheinanderliegendes Eingreifen der Lamellen der Synchronisierung in die Momentenübertragung ermöglichen.

Eine weitere vorteilhafte Ausgestaltung zeigt die Stufung der Lamellen derart, daß wenigstens eine erste Stufe zur Bildung des Einspurmomentes und wenigstens eine zweite Sufe zur Bildung des Synchronmomentes vorgesehen ist.

Eine weitere vorteilhafte Ausführung weist an der ersten Stufe zwei Reibflächen auf zur Bildung des kleineren Einspurmomentes und an der zweiten Stufe zehn Reibflächen zur Bildung des Synchronmomentes.

In einer weiteren vorteilhaften Ausgestaltung ist die Stufe zwischen dem Einschalten zweier nacheinanderfolgender Lamellen derart ausgebildet, daß Einschaltschwingungen abgebaut werden.

Beim Bewegen der Verzahnung an der Schiebemuffe in Richtung der Verzahnung am Kupplungskörpers eines einzuschaltenden Getriebeteils ergreift die Mitnahmeverzahnung der Lamellen zunächst nur in einer ersten Stufe mit wenigstens einer Lamelle die Kante der Schiebemuffe, um mit dieser Lamelle und dazugehörigen Reibflächen ein Reibmoment zu erzeugen, daß einem Einspurmoment entspricht. Der Aufbau dieses Einspurmomentes erfolgt zeitlich früher als der Aufbau des eigentlichen Synchronmomentes, das die Drehzahlannäherung herbeiführen soll. Durch das zeitlich vorlaufende Einspurmoment werden die Einschaltmomentschläge aus der Synchronisierung herausgehalten, die entstehen würden, wenn von vorneherein mit dem vollen Reibmoment aller Lamellen der Synchronisiervorgang begonnen würde. Somit findet praktisch eine leichte Vorsynchronisierung statt, an die sich die eigentliche Synchronisierung anschließt.

Die Erfindung wird anhand einer Zeichnung näher erläutert. Es zeigen:
- Fig. 1: eine Darstellung einer Lamellensynchronisierung;
- Fig. 2: eine Seitenansicht im Schnitt;
- Fig. 3: eine Draufsicht nach Fig. 2;
- Fig. 4: eine weitere Seitenansicht im Schnitt und
- Fig. 5: eine Draufsicht nach Fig. 4.

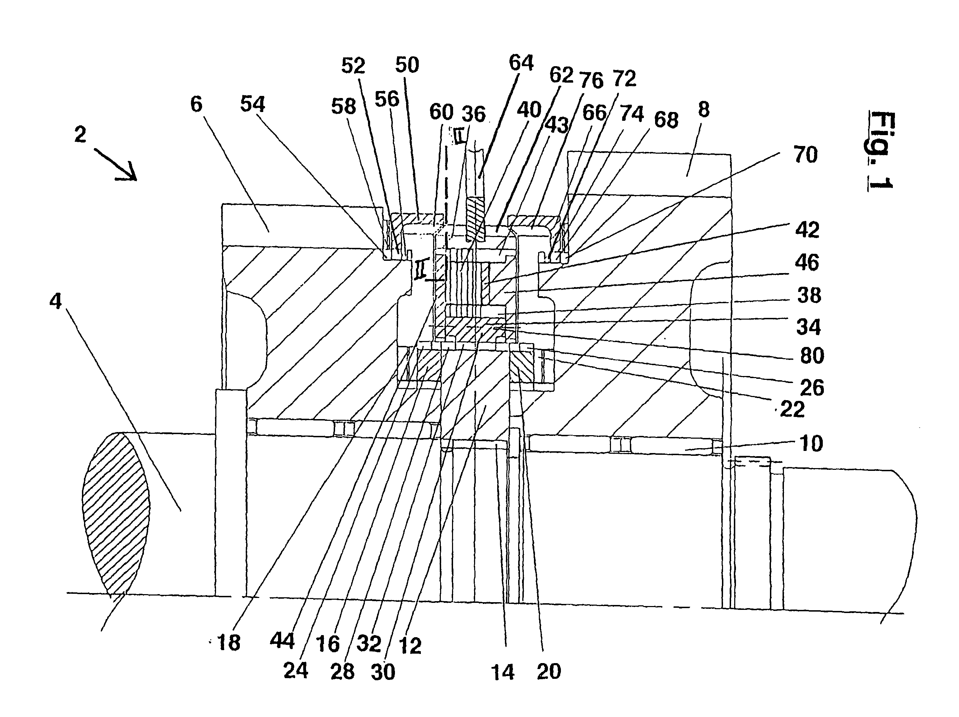

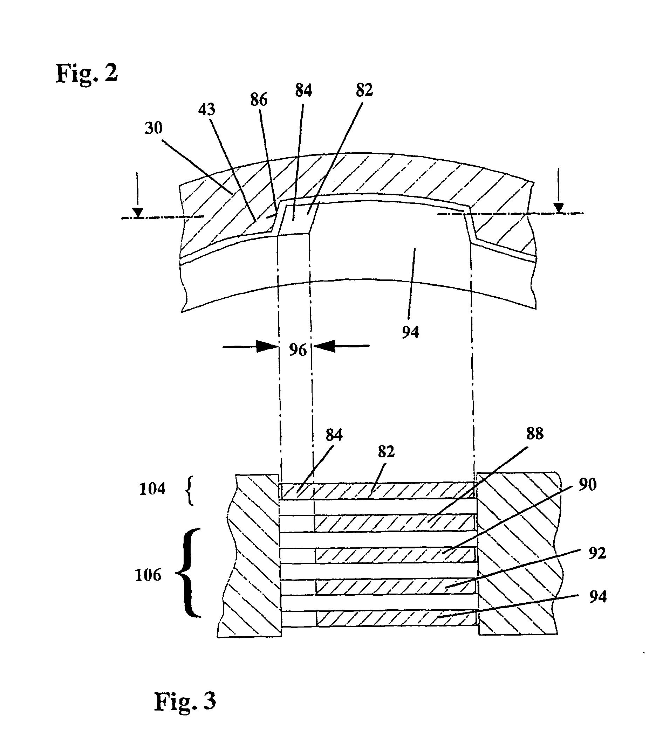

Die Fig. 1 zeigt die Darstellung der erfindungsgemäßen Synchronisierung 2. Auf einer Getriebewelle 4 sind zwei Zahnräder 6 und 8 axial fest, aber frei verdrehbar angeordnet. Dazu sind die Zahnräder 6 und 8 auf Lagern, beispielsweise Nadellagern 10, gelagert, so daß sie möglichst reibungsfrei um die Getriebewelle 4 rotieren können. Zwischen den Zahnrädern 6 und 8 ist auf der Getriebewelle 4 ein Synchronkörper 12 angeordnet, der mit der Getriebewelle 4 vorzugsweise über eine Verzahnung 14 drehfest verbunden ist. Zwischen dem Synchronkörper 12 und dem Zahnrad 6 ist ein Kupplungskörper 16 und eine Federeinrichtung 18 vorgesehen. Die Federeinrichtung 18 ist beispielsweise als Wellfeder ausgeführt und federt den Kupplungskörper 16 in Richtung auf den Synchronkörper 12 an. Zwischen dem Synchronkörper 12 und dem Zahnrad 8 ist ein Kupplungskörper 20 und eine Federeinrichtung 22 vorgesehen. Die Federeinrichtung 22 ist beispielsweise ebenfalls als Wellfeder ausgeführt und federt den Kupplungskörper 20 in Richtung auf den Synchronkörper 12 an.
Der Kupplungskörper 16 weist als eine Außenverzahnung eine Kupplungsverzahnung 24 auf. Ebenso weist der Kupplungskörper 20 als eine Außenverzahnung eine Kupplungsverzahnung 26 auf. Der Synchronkörper 12 weist eine Außenverzahnung 28 auf, in die die Schiebemuffe 30 mit einer Innenverzahnung eingreift. Die Schiebemuffe 30 ist mit ihrer Innenverzahnung in der Außenverzahnung 28 axial bewegbar. Die Innenverzahnung der Schiebemuffe 30 wirkt als eine Kupplungsverzahnung 32 mit den Kupplungsverzahnungen 24 und 26 an den Kupplungskörpern 16 und 20 zusammen. Die Kupplungsverzahnungen 24, 26, 32 können stumpf, d. h. ohne Anspitzungen, ausgeführt sein. Die Enden der Kupplungsverzahnungen 24, 26, 32 können dabei an den Ecken mit Abweisschrägen versehen werden, die es ermöglichen, ein Schalten bei unzulässig hohen Drehzahlen zu verhindern.
Des weiteren erweist sich eine Hinterrollung der Zähne der Kupplungsverzahnungen 24, 26, 32 als vorteilhaft, da hierdurch eine selbsthemmende Verbindung zwischen den Kupplungsverzahnungen 32 von Schiebemuffe 30 und Kupplungskörper 16, 20 erzielt wird, die ein unerwünschtes Herausspringen der Gänge verhindert.
Die Schiebemuffe 30 weist weiterhin an ihrem äußeren Umfang eine Außenverzahnung auf, die in Form einer Fangverzahnung 62 ausgestaltet ist, wie sie in Fig. 2 näher erläutert wird. In dem äußeren Umfang kann eine Nut vorgesehen sein, in die eine Schaltgabel 64 einer Schalteinrichtung vorteilhafterweise eingreifen kann.

Die Schiebemuffe 30 weist einen inneren Lamellenträger 34 und einen äußeren Lamellenträger 36 auf. Der Lamellenträger 34 greift beispielsweise mit einer Außenverzahnung 38 in entsprechende Verzahnungen an einzelnen Lamellen eines Lamellenpaketes 40 ein. Der Lamellenträger 36 greift seinerseits beispielsweise mit einer Innenverzahnung 43 ebenfalls in entsprechende Verzahnungen an anderen Lamellen des Lamellenpaketes 40 ein. Dabei folgt in axialer Reihenfolge jeweils eine Lamelle, die mit dem Lamellenträger 34 in Verbindung steht, auf eine Lamelle, die mit dem Lamellenträger 36 in Verbindung steht, wodurch bei einem Verdrehen der Lamellenträger 34 und 36 gegeneinander die Lamellen des Lamellenpaketes 40 jeweils aneinander reiben. Die Reibungsoberfläche der Lamellen besteht vorzugsweise aus Papier, jedoch sind auch andere Werkstoffe mit günstigen Reibeigenschaften, wie Molybdän-Reibbeläge oder Sinter-Reibbeläge, verwendbar. Um eine geringe axiale Ausdehnung der Schiebemuffe zu erzielen, sollte die Anzahl der Lamellen begrenzt werden, beispielsweise auf je drei Lamellen für jeden der Lamellenträger 34 und 36. Durch eine Federeinrichtung, beispielsweise eine Tellerfeder 42, wird das Lamellenpaket 40 in axialer Richtung unter eine definierte Vorspannung gesetzt, wobei das Lamellenpaket 40 durch die Tellerfeder 42 gegen ein erstes mit dem inneren Lamellenträger 34 verbundenes Bauteil 44 gedrückt wird. Die Tellerfeder 42 liegt andererseits an einem zweiten Bauteil 46 an und stützt sich gegenüber diesem axial ab. Das zweite Bauteil 46 ist ebenfalls mit dem inneren Lamellenträger 34 verbunden, beispielsweise in Form einer hier schematisch dargestellten Vernietung 80. Schraubverbindungen oder Anordnungen mit Stiften und Sicherungsringen sind ebenfalls verwendbar. Die Bauteile 44 und 46, die beispielsweise in Form von Blechen ausgeführt sein können, sind gegenüber dem äußeren Lamellenträger 36 frei verdrehbar.
Am Zahnrad 6 ist eine Fangeinrichtung 50 vorgesehen, die über eine Innenverzahnung 52 mit einer Außenverzahnung 54 am Zahnrad 6 mit dem Zahnrad 6 drehfest verbunden ist. In der Außenverzahnung 54 ist die Fangeinrichtung 50 mit ihrer Innenverzahnung 52 begrenzt axial verschiebbar. Dabei wird die Fangeinrichtung 50 axial einerseits durch einen Anschlag am Zahnrad 6 und andererseits durch eine Sicherungseinrichtung, beispielsweise einen Sicherungsring 56, begrenzt. Zwischen Fangeinrichtung 50 und Anschlag am Zahnrad 6 kann eine Federeinrichtung, beispielsweise eine Wellfeder 58, vorgesehen sein, durch die die Fangeinrichtung 50 gegenüber Schiebemuffe 30 axial angefedert wird. Die Fangeinrichtung 50 weist eine axial in Richtung auf die Schiebemuffe 30 gerichtete Fangverzahnung 60 auf, die in Fig. 2 näher erläutert wird. Die Fangverzahnung 60 ist dazu geeignet, in die Fangverzahnung 62 an der Schiebemuffe 30 einzugreifen.

Am Zahnrad 8 ist eine Fangeinrichtung 66 vorgesehen, die über eine Innenverzahnung 68 mit einer Außenverzahnung 70 am Zahnrad 8 mit dem Zahnrad 8 drehfest verbunden ist. In der Außenverzahnung 70 ist die Fangeinrichtung 66 mit ihrer Innenverzahnung 68 begrenzt axial verschiebbar. Dabei wird die Fangeinrichtung 66 axial einerseits durch einen Anschlag am Zahnrad 8 und andererseits durch eine Sicherungseinrichtung, beispielsweise einen Sicherungsring 72, begrenzt. Zwischen Fangeinrichtung 66 und Anschlag am Zahnrad 8 kann eine Federeinrichtung, beispielsweise eine Wellfeder 74, vorgesehen sein, durch die die Fangeinrichtung 66 gegenüber der Schiebemuffe 30 axial angefedert wird. Die Fangeinrichtung 66 weist eine axial in Richtung auf die Schiebemuffe 30 gerichtete Fangverzahnung 76 auf, die in Fig. 2 näher erläutert wird. Die Fangverzahnung 76 ist dazu geeignet, in die Fangverzahnung 62 an der Schiebemuffe 30 einzugreifen.

Die Lamellenträger 34 und 36 mit dem Lamellenpaket 40 sowie die Bauteile 44 und 46 und die Tellerfeder 42 bilden ein gemeinsam axial verschiebbares, einheitliches Schaltpaket. Zur Verschiebung dieses Schaltpaketes greift ein Betätigungselement, beispielsweise die Schaltgabel 64, in eine außen umlaufende Ausnehmung in dem äußeren Lamellenträger 36 der Schiebemuffe 30 ein.

Soll nun eines der lose rotierenden Zahnräder 6 oder 8 mit der eine andere Drehzahl aufweisenden Getriebewelle 4 verbunden werden, wird das einheitliche Schaltpaket in Richtung auf das anzukoppelnde Zahnrad verschoben. Durch die Verschiebung kommt der äußere Lamellenträger 36 mit der Fangeinrichtung 50 in Kontakt. Die durch die Wellfeder 58 angefederte Fangeinrichtung 50 kann dem Lamellenträger 36 axial ausweichen. In den Bereichen, in denen sich Lamellenträger 36 und Fangeinrichtung 50 berühren, weisen beide Bauteile Fangverzahnungen 60, 62 auf. Durch die geringe Masse der Fangeinrichtung 50 und unter der axial wirkenden Federkraft der Wellfeder 58 wird die Fangeinrichtung 50 mit der Fangverzahnung 60 im geeigneten Augenblick, d. h. bei Passieren einer Verzahnungslücke, in die Fangverzahnung 62 am Lamellenträger 36 einspuren. Durch das Einspuren kann die Fangeinrichtung 50 ein Drehmoment vom äußeren Lamellenträger 36 auf das Zahnrad 6 bzw. umgekehrt übertragen. Überschreitet dieses Drehmoment einen durch die Lamellenanzahl und Tellerfederauslegung bzw. Tellerfederverspannung einstellbaren Grenzwert, beginnt das Lamellenpaket zu rutschen. Die Verwendung von Papierlamellen ist hier sinnvoll, da der Unterschied zwischen Haftreibung und Gleitreibung gering gehalten werden kann.

Ursache für das die Reiblamellen gegeneinander verdrehende Moment ist die vorliegende Differenzdrehzahl zwischen dem Zahnrad 6, den mit ihm verbundenen trägen Drehmassen und der Getriebewelle 4. Ein dynamischer Stoßvorgang durch die schlagartige Beschleunigung von trägen Drehmassen wird durch die Lamellenkupplung vermieden und beschränkt sich lediglich auf die abrupte Beschleunigung des äußeren Lamellenträgers 36 und der damit verbundenen Reiblamellen. Durch die erfindungsgemäße Konstruktion können diese trägen Massen sehr klein gehalten werden. Die in den frei drehenden trägen Massen enthaltene Rotationsenergie beim Abbremsen bzw. die fehlende Energie beim Beschleunigen wird über die rutschende Lamellenkupplung übertragen. Die rutschende Lamellenkupplung übernimmt in dieser Synchronisierungsphase die Funktion der Drehzahlangleichung.
In dieser Synchronisierungsphase wird das gesamte Schaltpaket weiter in Richtung auf das Zahnrad 6 verschoben. Geführt wird das Schaltpaket dabei in den Verzahnungen 28, 32 zwischen innerem Lamellenträger 30 und Synchronkörper 12. Nach einem definierten Verschiebeweg kommt die Kupplungsverzahnung 32 des inneren Lamellenträgers 30 mit der äußeren Kupplungsverzahnung 24 am Kupplungskörper 16 in Kontakt. Der Kupplungskörper 16 kann aufgrund seiner Anfederung durch die Wellfeder 18 dem inneren Lamellenträger 30 axial ausweichen.

Bei mit stumpfen Enden ausgeführten Kupplungsverzahnungen 24, 32 stehen die stumpfen Stirnflächen mit hoher Wahrscheinlichkeit unter Vorspannung der Feder aufeinander. Ist es zufällig bereits zu einem Einspuren gekommen, so ist der Schaltvorgang insgesamt abgeschlossen. Andernfalls wird im Zustand des verspannten Aufeinanderstehens der Verzahnungen die Fahrzeugkupplung geschlossen und das sich aufbauende Drehmoment verdreht die Verzahnungen gegeneinander. Es kommt zum Einspuren der Verzahnungen und die Schaltung ist abgeschlossen. Auch durch Schleppmomente am Radsatz des Getriebes ist ein vorzeitiges Verdrehen der Verzahnungen gegeneinander und ein anschließendes Einspuren möglich.

Wird die Schaltung beispielsweise nicht von einem Fahrer per Schaltgestänge von Hand ausgeführt, so ist auch die Alternative einer automatischen Schaltung durch Schaltmittel möglich, die vom Fahrer fernbetätigt werden. Dabei kann die Fernbetätigung auch unter Zwischenschaltung einer logischen Steuerung geschehen, die Einfluß auf die schaltbaren Gangstufen nimmt. Unbeeinflußt durch den Fahrer kann eine Automatik auch die gesamte Schaltung des Schaltgetriebes übernehmen, wobei vorzugsweise immer in den optimalen Bereichen geschaltet wird.

Als Schaltmittel kommen überwiegend pneumatisch oder elektrisch betätigte Schaltmittel zum Einsatz. Ebenfalls sind hydraulisch betätigte Schaltmittel anwendbar.

Durch den Wegfall der Einspurschrägen an den Kupplungsverzahnungen läßt sich ein kurzer Schaltweg erreichen. Dieser Weggewinn kann zu einer Vergrößerung der Übersetzung zwischen Schalthebel und Schiebemuffe genutzt werden. Dadurch lassen sich die Schalt- und Wählwege am Schalthebel bei geringen Schaltkräften deutlich verringern.

Das gefederte Aufeinandertreffen der Kupplungsverzahnungen von Schiebemuffe und Kupplungskörper vermittelt dem Fahrer ein verbessertes Schaltgefühl und ermöglicht hohe Schaltdrehzahlen.

Bei automatisierten Synchronisierungen mit einer Motorführung, bei der ein Synchronisieren der zu schaltenden Getriebeteile durch einen Eingriff in die Motorsteuerung erzielt wird, läßt sich die vorgeschlagene Synchronisierung besonders vorteilhaft einsetzen. Dabei ist immer eine definierte Differenzdrehzahl vorhanden. Insbesondere hierbei kann mit hohem Kostenvorteil eine sichere Synchronisierung der zu schaltenden Gangstufen erreicht werden.
Die momentenübertragenden Verzahnungen weisen ein möglichst geringes Flankenspiel auf.

Ein ausreichend langes Synchronisieren im Lamellenpaket 40 ist notwendig, bevor die für die Drehmomentenübertragung vorgesehenen Kupplungsverzahnungen 24, 26, 32 die freien Drehmassen aus dem Reibschluß der Lamellenkupplung in den Formschluß der Kupplungsverzahnungen überführen, um einen Momentenstoß unzulässiger Höhe zu vermeiden. Dies läßt sich erreichen durch die erfindungsgemäße Anordnung der Lamellen in Form von Stufen.

Die Fig. 2 zeigt einen Schnitt durch das Lamellenpaket 40 entlang der Linie II-II nach Fig. 1. Als eine erste Stufe 104 liegt eine erste Lamelle 82 mit ihrem Zahn 84, der in die Schiebemuffe 30 hineinragt, an einer Kante 86 der Innenverzahnung 43 der Schiebemuffe 30 mit einem geringfügigen Spiel oder auch spielfrei an. Die weiteren Zähne 88, 90, 92, 94 (Fig. 3) bilden eine zweite Stufe und weisen gegenüber der Kante 86 eine Lücke 96 auf. Dadurch legen sich die Zähne 88, 90, 92, 94 erst später an der Kante 86 an als der Zahn 84. Damit kann von der Lamelle 82 mit ihren Reibflächen zunächst das Einspurmoment übertragen werden, während die Reibflächen der anderen Lamellen erst verzögert zur Übertragung des Synchronmomentes eingesetzt werden. Sobald die Fangeinrichtung 50 in die Fangverzahnung 62 der Schiebemuffe 30 (Fig. 1) einspurt, legt sich zunächst der Zahn 84 an der Kante 86 an und überträgt das Einspurmoment. Erst verzögert nach Überwindung der Lücke 96 legen sich die Zähne 88, 90, 92, 94 an der Kante 86 an.

Die Fig. 3 zeigt einen Schnitt durch das Lamellenpaket entlang der Linie III-III nach Fig. 1 und Fig. 2. Hier ist die Lücken zwischen Zahn 84 einerseits und den Zähnen 88, 90, 92 und 94 gut erkennbar.

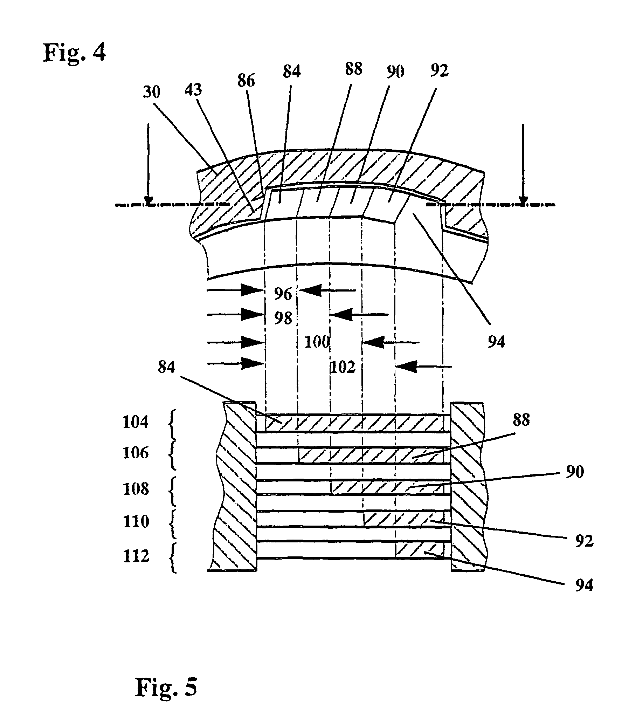

Die Fig. 4 zeigt einen Schnitt durch das Lamellenpaket 40 entlang der Linie II-II nach Fig. 1 in einer weiteren vorteilhaften Ausführung. Als eine erste Stufe 104 liegt eine erste Lamelle 82 mit ihrem Zahn 84, der in die Schiebemuffe 30 hineinragt, an der Kante 86 der Innenverzahnung 43 der Schiebemuffe 30 mit einem geringfügigen Spiel an. Die weiteren Zähne 88, 90, 92, 94 (Fig. 3) bilden weitere Stufen 106, 108, 110, 112 und weisen gegenüber der Kante 86 jeweils von Zahn zu Zahn zunehmende Lücken 96, 98, 100, 102 auf. Dadurch legen sich die Zähne 88, 90, 92, 94 erst abgestuft später an der Kante 86 an als der Zahn 84. Damit kann von der Lamelle 82 mit ihren Reibflächen zunächst das Einspurmoment übertragen werden, während die Reibflächen der anderen Lamellen erst gestuft verzögert zur Übertragung des Synchronmomentes eingesetzt werden. Sobald die Fangeinrichtung 50 in die Fangverzahnung 62 der Schiebemuffe 30 (Fig. 1) einspurt, legt sich zunächst der Zahn 84 an der Kante 86 an und überträgt das Einspurmoment. Erst verzögert nach Überwindung der Lücke 96 legt sich der Zahn 88 an der Kante 86 an. Nach der Überwindung von jeweils einer weiteren Lücke legen sich die Zähne 90, 92 und 94 an der Kante 86 an. Erst nach Anlage des Zahnes 94 an der Kante 86 übertragen alle Lamellen das volle Synchronmoment.

Die Fig. 5 zeigt einen Schnitt durch das Lamellenpaket entlang der Linie III-III nach Fig. 1 und Fig. 4. Hier sind die Stufen und die Lücken zwischen Zahn 84 einerseits und den Zähnen 88, 90, 92 und 94 gut erkennbar.

Die möglichst geringe Masse von Fangverzahnungen und Kupplungskörpern mit einer vorzugsweise angefederten Anordnung schafft eine dynamisch günstige Fang- und Einspurmechanik, um ein Einfangen der Zahnräder bei hoher Drehzahldifferenz und ein sicheres Einspuren in die jeweilige Gegenverzahnung zu erreichen bei geringstem Verschleiß der Verzahnungen.
Eine in Umfangsrichtung drehelastische Anordnung der Fangverzahnung kann eine weitere Verbesserung des Dämpfungsverhaltens beim Einspuren der Fangverzahnung darstellen.

Die Fangverzahnungen können an den Zahnrädern auch so angeordnet sein, daß sie auf den Zahnrädern verdrehbar sind, wenn ein hohes, definiert vorgegebenes Reibmoment überschritten wird. Dieses Reibmoment liegt höher als das Reibmoment in dem Lamellenpaket. Durch das Verdrehen können hohe Aufprallspitzen der Fangverzahnung gedämpft werden.

Die Verwendung von Reiblamellen mit Papierbelägen, die zu einem Paket zusammengefaßt für zwei Gangstufen gemeinsam nutzbar sind, schaffen einen Kostenvorteil. Ebenso sind diese weitaus umweltverträglicher als beispielsweise Lamellen mit Molybdänreibschichten. Eine optimale Lösung in der Art der Lamellengestaltung stellt eine Lamelle dar, deren Haftreibwert kleiner als ihr Gleitreibwert ist.

Ebenfalls verbilligt das Weglassen einer Sperrvorrichtung die Synchronisierung, ganz abgesehen von der Vermeidung aller häufig auftretenden Sperrprobleme.

### Bezugszeichen

- 2: Synchronisierung
- 4: Getriebewelle
- 6: Zahnrad
- 8: Zahnrad
- 10: Nadellager
- 12: Synchronkörper
- 14: Verzahnung
- 16: Kupplungskörper
- 18: Federeinrichtung
- 20: Kupplungskörper
- 22: Federeinrichtung
- 24: Kupplungsverzahnung
- 26: Kupplungsverzahnung
- 28: Außenverzahnung
- 30: Schiebemuffe
- 32: Kupplungsverzahnung
- 34: innerer Lamellenträger
- 36: äußerer Lamellenträger
- 38: Außenverzahnung
- 40: Lamellenpaket
- 42: Tellerfeder
- 43: Innenverzahnung
- 44: Bauteil
- 46: Bauteil
- 50: Fangeinrichtung
- 52: Innenverzahnung
- 54: Außenverzahnung
- 56: Sicherungsring
- 58: Wellfeder
- 60: Fangverzahnung
- 62: Fangverzahnung
- 64: Schaltgabel
- 66: Fangeinrichtung
- 68: Innenverzahnung
- 70: Außenverzahnung
- 72: Sicherungsring
- 74: Wellfeder
- 76: Fangverzahnung
- 80: Vernietung
- 82: Lamelle
- 84: Zahn
- 86: Kante
- 88: Zahn
- 90: Zahn
- 92: Zahn
- 94: Zahn
- 96: Lücke
- 98: Lücke
- 100: Lücke
- 102: Lücke
- 104: Stufe
- 106: Stufe
- 108: Stufe
- 110: Stufe
- 112: Stufe

## Patentansprüche

1. Synchronisiereinrichtung (2) für drehmomentübertragende Bauteile (4, 6, 8) eines Schaltgetriebes mit einem Lamellenpaket (40), das mehrere Lamellen (82) aufweist und mit einer Schiebemuffe (30), die mit einer Schalteinrichtung (64) verbunden ist, **dadurch gekennzeichnet, daß** die Synchronisierung (2) Mittel (82, 84, 86, 88, 90, 92, 94) aufweist, die das Moment zwischen den drehmomentübertragenden Bauteilen (4, 6, 8) auf ein anfängliches kleineres Einspurmoment und ein nachfolgend größeres Synchronmoment aufteilen.

2. Synchronisiereinrichtung (2) für drehmomentübertragende Bauteile (4, 6, 8) eines Schaltgetriebes nach Anspruch 1, **dadurch gekennzeichnet, daß** die Mittel durch eine Stufung der Lamellen (82) gebildet ist, die ein zeitlich nacheinanderliegendes Eingreifen der Lamellen in die Momentenübertragung ermöglichen.

3. Synchronisiereinrichtung (2) für drehmomentübertragende Bauteile (4, 6, 8) eines Schaltgetriebes nach Anspruch 2, **dadurch gekennzeichnet, daß** die Stufung der Lamellen (82) wenigstens eine erste Stufe zur Bildung des Einspurmomentes und wenigstens eine zweite Stufe zur Bildung des Synchronmomentes aufweist.

4. Synchronisiereinrichtung (2) für drehmomentübertragende Bauteile (4, 6, 8) eines Schaltgetriebes nach Anspruch 3, **dadurch gekennzeichnet, daß** an der ersten Stufe zwei Reibflächen vorgesehen sind zur Bildung des kleineren Einspurmomentes und an der zweiten Stufe zehn Reibflächen zur Bildung des Synchronmomentes vorgesehen sind

5. Synchronisiereinrichtung (2) für drehmomentübertragende Bauteile (4, 6, 8) eines Schaltgetriebes nach einem der Ansprüche 2 bis 4, **dadurch gekennzeichnet, daß** die Stufe zwischen dem Einschalten zweier nacheinanderfolgender Lamellen (82) derart ausgebildet ist, daß Einschaltschwingungen abgebaut werden.

6. Synchronisiereinrichtung (2) für drehmomentübertragende Bauteile (4, 6, 8) eines Schaltgetriebes nach einem der Ansprüche 2 bis 4, **dadurch gekennzeichnet, daß** die Bildung der Stufen durch eine unterschiedliche Breite der Zähne (84, 88, 90, 92, 94) radial an der Außenseite der Lamellen (82) erreichbar ist.

## Claims

1. Synchronizing mechanism (2) for the torque-transmitting components (4, 6, 8) of a manual transmission, equipped with a disk set (lamination) (40), which features a number of disks (82), and with a sliding sleeve (30), which is connected to a shifting gear (64), **characterized in that** the synchronizing mechanism (2) features agents (82, 84, 86, 88, 90, 92, 94) by means of which the torque among the torque-transmitting components (4, 6, 8) is split into an initial lower meshing torque and a subsequent higher synchronizing torque.

2. Synchronizing mechanism (2) for the torque-transmitting components (4, 6, 8) of a manual transmission according to claim 1, **characterized in that** the agents are formed by means of graded disks (82), which allows successive intervention in the torque transmission by the disks.

3. Synchronizing mechanism (2) for the torque-transmitting components (4, 6, 8) of a manual transmission according to claim 2, **characterized in that** the grading of the disks (82) consists of at least a first step for the generation of a meshing torque and a second step for the generation of the synchronizing torque.

4. Synchronizing mechanism (2) for the torque-transmitting components (4, 6, 8) of a manual transmission according to claim 3, **characterized in that** the first step features two friction surfaces for the generation of the lower meshing torque and that the second step features ten friction surfaces for the generation of the synchronizing torque.

5. Synchronizing mechanism (2) for the torque-transmitting components (4, 6, 8) of a manual transmission according to one of the claims 2 to 4, **characterized in that** the step between the engagement of two successive disks (82) is designed in such a manner that engagement vibrations are reduced.

6. Synchronizing mechanism (2) for the torque-transmitting components (4, 6 8) of a manual transmission according to one of the claims 2 to 4, **characterized in that** the formation of steps radially on the exterior of the disks (82) is achievable by means of different tooth widths (84, 88, 90, 92, 94).

## Revendications

1. Dispositif de synchronisation (2) des éléments de transmission du couple (4, 6, 8) d'une boîte de vitesses mécanique dotée d'un jeu de disques (40) comportant plusieurs disques (82) et un manchon coulissant (30), celui-ci étant lié à un dispositif de commande (64), **caractérisé en ce que** la synchronisation (2) comporte des moyens (82, 84, 86, 88, 90, 92, 94) permettant de répartir le couple entre les éléments de transmission du couple (4, 6, 8) pour obtenir un couple d'engagement initial moins élevé et, par la suite, un couple de synchronisation plus élevé.

2. Dispositif de synchronisation (2) pour les éléments de transmission du couple (4, 6, 8) d'une boîte de vitesses mécanique selon la revendication 1, **caractérisé en ce que** les moyens sont formés par une gradation des disques (82) permettant, lors de la transmission du couple, l'engrènement successif des disques.

3. Dispositif de synchronisation (2) pour les éléments de transmission du couple (4, 6, 8) d'une boîte de vitesses mécanique selon la revendication 2, **caractérisé en ce que** la gradation des disques (82) comporte au moins un premier étage pour la formation du couple d'engagement et au moins un deuxième étage pour la formation du couple de synchronisation.

4. Dispositif de synchronisation (2) pour les éléments de transmission du couple (4, 6, 8) d'une boîte de vitesses mécanique selon la revendication 3, **caractérisé en ce que** au niveau du premier étage sont prévues deux surfaces de frottement pour la formation du couple d'engagement moins élevé et **en ce que** au niveau du deuxième étage sont prévues dix surfaces de frottement pour la formation du couple de synchronisation.

5. Dispositif de synchronisation (2) pour les éléments de transmission du couple (4, 6, 8) d'une boîte de vitesses mécanique selon une des revendications 2 à 4, **caractérisé en ce que** l'étage entre l'engagement de deux disques successifs (82) est conçu de façon à ce que des vibrations d'enclenchement soient éliminées.

6. Dispositif de synchronisation (2) pour les éléments de transmission du couple (4, 6, 8) d'une boîte de vitesses mécanique selon une des revendications 2 à 4, **caractérisé en ce que** la formation des étages peut être atteinte grâce à des dents (84, 88, 90, 92, 94) de largeur différente réparties radialement sur le côté extérieur des disques (82).
